# EUROPEAN PATENT SPECIFICATION

(11) **EP 2 296 085 B1**
(45) Date of publication and mention of the grant of the patent: **15.05.2013**
(21) Application number: 10190560.2
(22) Date of filing: 26.05.2005
(51) Int. Cl.: G06F 3/06, G06F 12/08

(54) **Data storage system and capacity changing method**
Datenspeichersystem und Datenspeichersteuervorrichtung
Système de stockage de données et appareil de commande pour une mémoire de données

(30) Priority: 30.11.2004 JP 2004347411; 28.01.2005 JP 2005022121
(43) Date of publication of application: 16.03.2011
(62) Divisional of application: 05253250.4
(73) Proprietor: FUJITSU LIMITED, Kawasaki-shi, Kanagawa 211-8588 (JP)
(72) Inventor: O'Hara, Shigeyoshi, Kawasaki-shi, Kanagawa 211-8588 (JP); Masuyama, Kazunori, Kahoku-gun, Ishikawa 929-1192 (JP)
(74) Representative: Gibbs, Christopher Stephen

(56) References cited:
- EP-A- 1 132 805
- EP-A- 1 353 264
- INTERNATIONAL BUSINESS MACHINES CORPORATION: "Visual assistance for optimum cabling" RESEARCH DISCLOSURE, MASON PUBLICATIONS, HAMPSHIRE, GB, vol. 453, no. 120, 1 January 2002 (2002-01-01), XP007129657 ISSN: 0374-4353

## Description

The present invention relates to a configuration of a data storage system and a data storage control device which are used for an external storage device of a computer, and more particularly to a data storage system and a data storage control device having a combination and connection of units which can construct a data storage system connecting many disk devices with high performance and flexibility.

Recently as various data is computerized and handled on computers, a data storage device (external storage device) which can efficiently store large volumes of data with high reliability for processing, independently from a host computer which executes the processing of the data, is increasingly more important.

For this data storage device, a disk array device having many disk devices (e.g. magnetic disks and optical disks) and a disk controller for controlling these many disk devices are used. This disk array device can receive disk access requests simultaneously from a plurality of host computers and control many disks.

Recently a disk array device which can control a disk device group with several thousand or more disk devices, that is with several hundred terabytes or more by itself, is available.

Such a disk array device contains a memory, which plays the part of a cache of a disk. By this the data access time when a read request or write request is received from the host computer can be decreased, and higher performance can be implemented.

Generally a disk array device comprises a plurality of major units, that is, a channel adapter which is a connection section with the host computer, a disk adapter which is a connection section with the disk drive, a cache memory, a cache control unit which is in charge of the cache memory, and many disk drives.

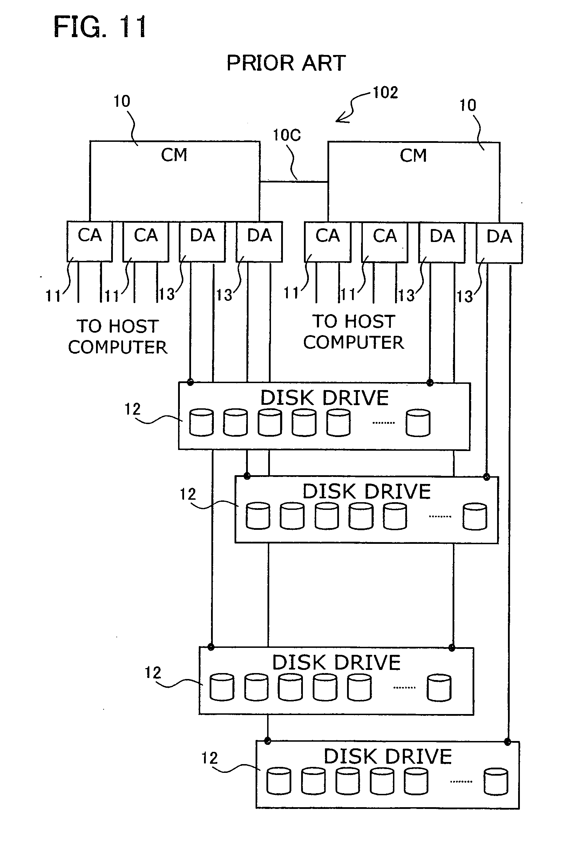

**Fig. 11** is a diagram of a first prior proposal. The disk array device 102 shown in Fig. 11 has two cache managers (cache memory and cache control unit) 10, and the channel adapter 11 and the disk adapter 13 are connected to each cache manager 10.

The two cache managers 10 are directly connected via a bus 10c so that communication is possible. The two cache managers 10 and 10, the cache manager 10 and the channel adapter 11, and the cache manager 10 and the disk adapter 13 are connected via a PCI bus respectively since low latency is required.

The channel adapter 11 is connected to the host computer (not illustrated) by Fibre Channel or Ethernet, for example, and the disk adapter 13 is connected to each disk drive of the disk enclosure 12 by a cable of the Fibre Channel, for example.

The disk enclosure 12 has two ports (e.g. Fibre Channel ports), and these two ports are connected to different disk adapters 13. This provides redundancy, which increases resistance against failure.

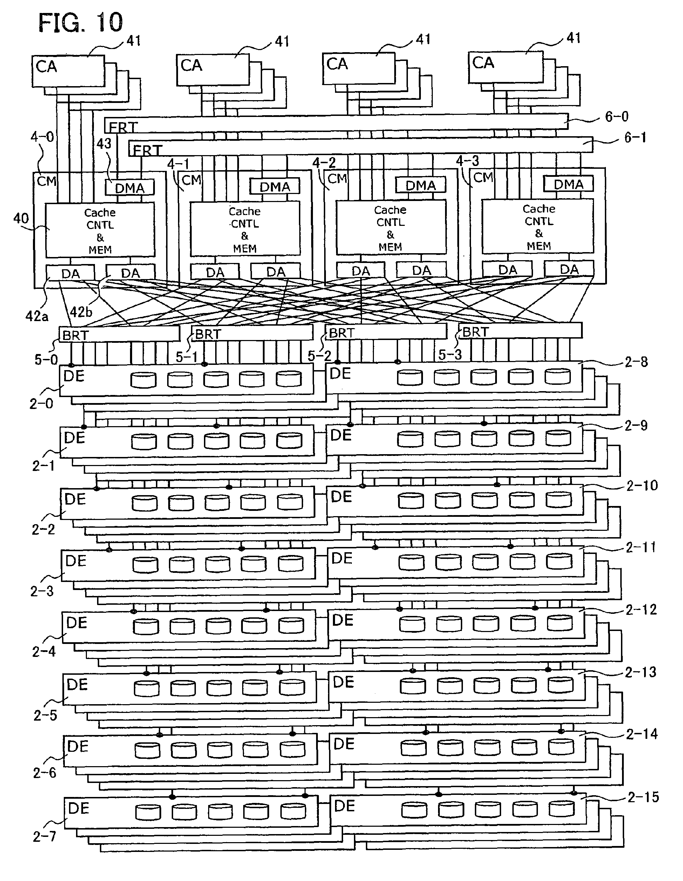

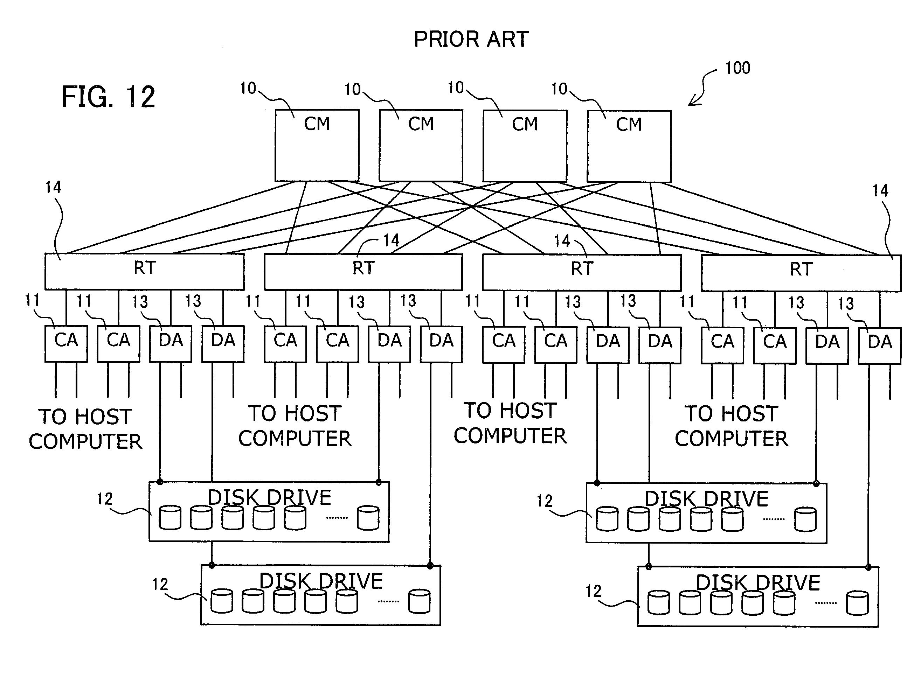

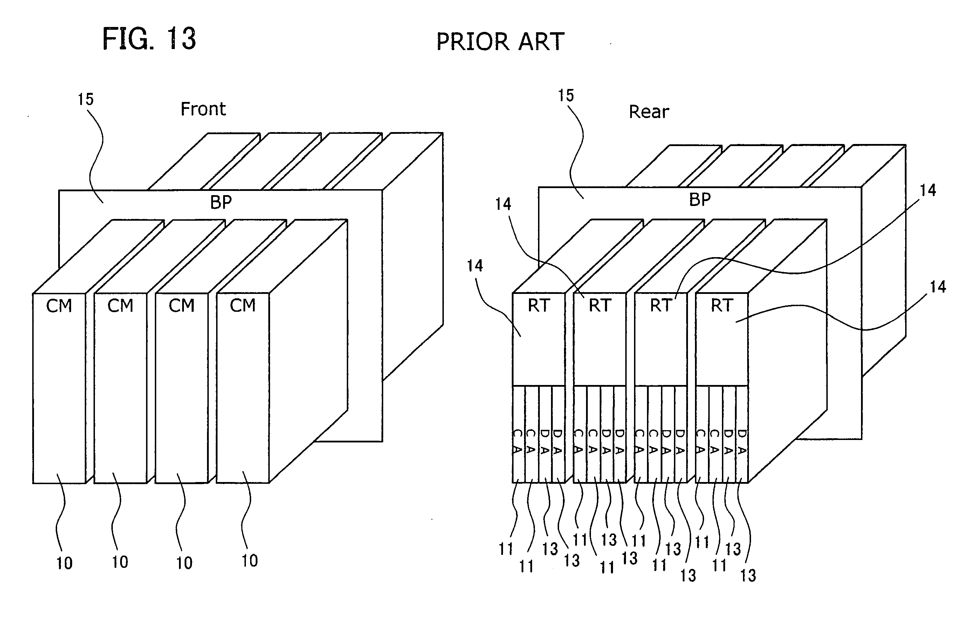

**Fig. 12** is a block diagram depicting a disk array device 100 of a second prior proposal. As Fig. 12 shows, the proposed disk array device 100 has cache managers (denoted as CM in figures 10), comprising a cache memory and a cache control unit as a major unit, channel adapters (denoted as CA in figures 11) which are interfaces with a host computer (not illustrated), disk enclosures 12 each comprised of a plurality of disk drives, and disk adapters (denoted as DA in figures 13) which are interfaces with this disk device 12.

The disk array device further has routers (denoted as RT in figures 14) for inter-connecting the cache managers 10, channel adapters 11, and disk adapters 13 for performing data transfer and communication between these major units.

This disk array device 100 comprises four cache managers 10 and four routers 14 which correspond to these cache managers 10. These cache managers 10 and routers 14 are inter-connected one-to-one, therefore connection between a plurality of cache managers 10 is redundant, and accessibility improves (e.g. Japanese Patent Application Laid-Open No. 2001-256003).

In other words, even if one router 14 fails, the connection between a plurality of cache managers 10 is secured by way of another router 14, and even in this case, the disk array device 100 can continue normal operation.

In this disk array device 100, two channel adapters 11 and two disk adapters 13 are connected to each router 14, and the disk array device 100 comprises a total of eight channel adapters 11 and a total of eight disk adapters 13.

These channel adapters 11 and disk adapters 13 can communicate with all the cache managers 10 by the interconnection of the cache managers 10 and routers 14.

The channel adapter 11 is connected to a host computer (not illustrated), which processes data, by Fibre Channel or Ethernet®, and the disk adapter 13 is connected to the disk enclosure 12 (specifically the disk drive) by a cable of Fibre Channel, for example.

And not only user data from the host computer but also various information to maintain the consistency of internal operations of the disk array device 100 (e.g. mirroring processing of data among a plurality of cache memories) between the channel adapter 11 and the cache manager 10 and between the disk adapter 13 and the cache manager 10 is exchanged.

The cache manager 10, channel adapter 11 and disk adapter 13 are connected with the router 14 via an interface that can implement a lower latency (faster response speed) than the communication between the disk array device 100 and host computer, or the disk array device 100 and disk drive. For example, the cache manager 10, channel adapter 11 and disk adapter 13 are connected with the router 14 by a bus designed to connect an LSI (Large Scale Integration) and a printed circuit board, such as a PCI (Peripheral Component Inter-connect) bus.

The disk enclosure 12 for housing disk drives has two Fibre Channel ports that are connected to a disk adapter 13 belonging to a different router 14 respectively. By this the disconnection of the connection from the cache manager 10 can be prevented even when a failure occurs in the disk adapter 13 or router 14.

Because of recent advancements of computerization, data storage systems with larger capacities and faster speeds are demanded. In the case of the above mentioned disk array device of the first proposal, if the cache managers 10, channel adapters 11 and disk adapters 13 are extended to increase capacity and speed, the number of ports of the disk enclosure 12 must be increased and the number of connection cables between the disk adapters 13 and the disk enclosure 12 must be increased.

Increasing the number of ports of the disk enclosure 12 increases the number of cables according to the number of disk adapters to be connected to one disk enclosure, which increases mounting space. This means that the size of the device increases. Increasing the number of ports is also a poor idea since a sufficient redundant structure can be implemented for one disk enclosure only if there are two systems of paths. Also the number of disk adapters to be connected is not constant, but changes according to user demands, so if many ports are extended, waste is generated if a small number of disk adapters are used, but if few ports are extended, these cannot support many disk adapters. In other words, flexibility is lost.

In the case of the disk array device of the second proposal, on the other hand, extending the cache managers 10, channel adapters 11 and disk adapters 13 is possible, but all communication is through the routers 14, so communication data concentrates in the routers 14, which becomes a throughput bottleneck, therefore high throughput cannot be expected. Also in the case of the disk array device 100, the number of connection lines between the cache managers 10 and routers 14 sharply increases if a large scale disk array device having many major units is constructed, and this makes the connection relationship complicated and mounting becomes physically difficult.

For example, in the case of the configuration shown in Fig. 12, four (four plates of) cache managers 10 and four routers 14 are connected via the back panel 15, as shown in Fig. 13. In this case, the number of signals is (4×4× (number of signal lines per path)), as shown in Fig. 12. For example if one path is connected by a 64-bit PCI (parallel path), the number of signal lines on the back panel 15 is 100×16=1600 including the control lines. To wire these signal lines, the printed circuit board on the back panel 15 requires six signal layers.

In the case of a large-scale configuration, such as a configuration where eight (four plates of) cache managers 10 and eight (four plates of) routers 14 are connected via the back panel 15, the required number of signal lines is about 100×8×8=6400. Therefore the printed circuit board of the back panel 15 requires 24 layers, which is four times the above case, of which implementation is difficult.

If four lanes of a PCI-Express bus, which has fewer signal lines than a 64-bit PCI bus, are used for connection, the number of signal lines is 16x8x8=1024. However where the PCI bus runs at 66MHz, the PCI-Express bus is a 2.5Gbps high-speed bus, and in order to maintain the signal quality of a high-speed bus, expensive substrate material must be used.

If a low-speed bus is used, the wiring layer can be replaced by using vias, but in the case of a high-speed bus, vias should be avoided since this drops the signal quality. Therefore in the case of a high-speed bus, a layout is required such that all the signal lines do not cross, so about double the signal layers are required compared with a low-speed bus having the same number of signal lines. For example, a board requires 12 signal layers, and these must be constructed using expensive material, therefore this is also difficult to be implemented.

Also in the case of the disk array device 100 of the second proposal, if one of the routers 14 fails, the channel adapters 11 and disk adapters 13 connected to this router 14 also cannot be used thereafter when that router 14 fails.

With the foregoing in view, it is desirable to provide a data storage system and data storage control device for performing data transfer among each unit at high throughput, and easily implement a small scale to large scale configuration without causing mounting problems.

It is also desirable to provide a data storage system and data storage control device having the flexibility to easily implement a small scale to large scale configuration in a combination of same units, while maintaining redundancy which enables operation even if one unit fails.

It is further desirable provide a data storage system and data storage control device for easily implementing a small scale to large scale configuration without causing mounting problems while maintaining high throughput and redundancy.

The data storage system and method of the present invention are defined in claims 12 and 7. The system will generally have a plurality of storage devices for storing data and a plurality of control modules for performing access control of the storage devices according to an access instruction from a host. The control module further has a cache memory for storing a part of data stored in the storage device, a cache control unit for controlling the cache memory, a first interface unit for controlling the interface with the host, a second interface unit for controlling the interface with the plurality of storage devices, and a plurality of first switch units disposed between the plurality of control modules and the plurality of storage devices for selectively switching the second interface unit of each control module and the plurality of storage devices. The plurality of control modules and the plurality of first switch units are connected using a back panel.

A data storage control device of the present invention has a cache memory for storing a part of data stored in the storage device, a cache control unit for controlling the cache memory, a plurality of control modules having a first interface unit for controlling the interface with the host and a second interface unit for controlling the interface with the plurality of storage devices, and a plurality of first switch units disposed between the plurality of control modules and the plurality of storage devices for selectively switching the second interface unit of each control module and the plurality of storage devices. The plurality of control modules and the plurality of first switch units are connected using a back panel.

In the present invention, it is preferable that the cache control unit and the second interface unit are connected by a high-speed serial bus with low latency, and the second interface unit and the plurality of first switch units are connected by a serial bus using a back panel.

In the present invention, it is also preferable that the control module further has a communication unit for communicating with another one of the control modules, and further comprises a second switch unit for selectively connecting the communication unit of each of the control modules.

In the present invention, it is also preferable that the communication unit of each control module and the second switch unit are connected using a back panel.

In the present invention, it is also preferable that the first switch unit and the plurality of storage devices are connected by cables.

In the present invention, it is also preferable that the storage device further comprises a plurality of access ports, and the plurality of different first switch units are connected to the plurality of access ports.

In the present invention, it is also preferable that the cache control unit and the second interface unit are connected by a plurality of lanes of high-speed serial buses, and the second interface unit and the plurality of first switch units are connected by a serial bus using a back panel.

In the present invention, it is also preferable that the high-speed serial bus is a PCI-Express bus.

In the present invention, it is also preferable that the serial bus is a Fibre Channel bus.

In the present invention, it is also preferable that the cache control unit and the first interface unit are connected by a high-speed serial bus with low latency.

In the present invention, the second interface of each control module and the plurality of first switch units are connected, so all the control modules can maintain redundancy to access all the storage devices, and even if the number of control modules increases, the control modules and first switch units are connected by a serial bus, which has a small number of signals constituting the interface, using a back panel, so mounting on the printed circuit board is possible.

Reference is made, by way of example only, to the accompanying drawings in which:
- Fig. 1: is a block diagram depicting a data storage system according to an embodiment of the present invention;
- Fig. 2: is a block diagram depicting a control module in Fig. 1;
- Fig. 3: is a block diagram depicting the back end routers and disk enclosures in Fig. 1 and Fig. 2;
- Fig. 4: is a block diagram depicting the disk enclosures in Fig. 1 and Fig. 3;
- Fig. 5: is a diagram depicting the read processing in the configurations in Fig. 1 and Fig. 2;
- Fig. 6: is a diagram depicting the write processing in the configurations in Fig. 1 and Fig. 2;
- Fig. 7: is a diagram depicting the mounting configuration of the control modules according to an embodiment of the present invention;
- Fig. 8: is a diagram depicting a mounting configuration example of the data storage system according to an embodiment of the present invention;
- Fig. 9: is a block diagram depicting a large scale storage system according to an embodiment of the present invention;
- Fig. 10: is a block diagram depicting a medium scale storage system according to another embodiment of the present invention;
- Fig. 11: is a block diagram depicting a storage system according to a first prior art;
- Fig. 12: is a block diagram depicting a storage system according to a second prior art; and
- Fig. 13: is a diagram depicting a mounting configuration of the storage system according to the second prior art in Fig. 12.

Embodiments of the present invention will now be described in the sequence of the data storage system, read/write processing, mounting structure and other embodiments.

### Data storage system

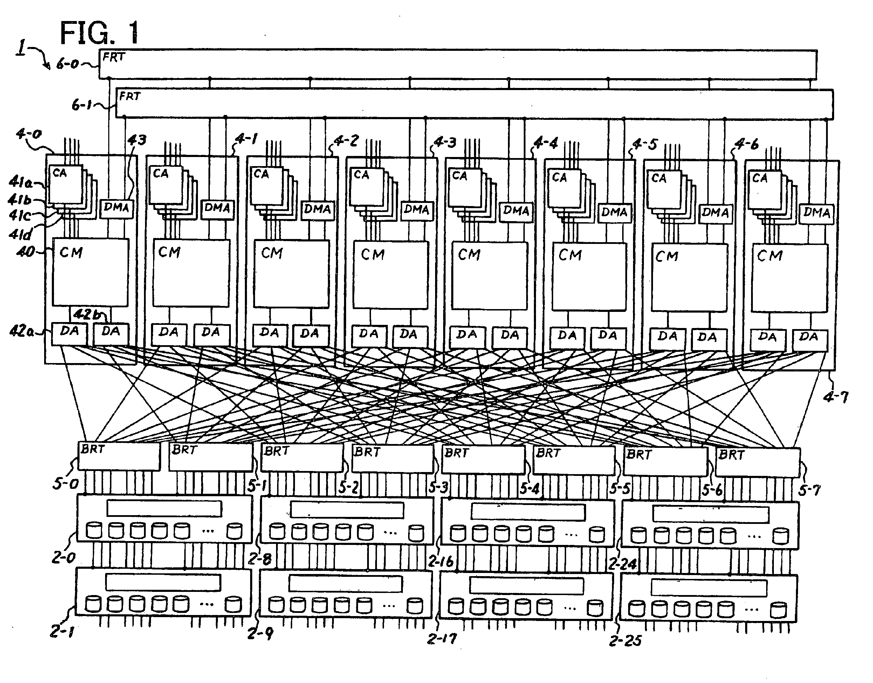

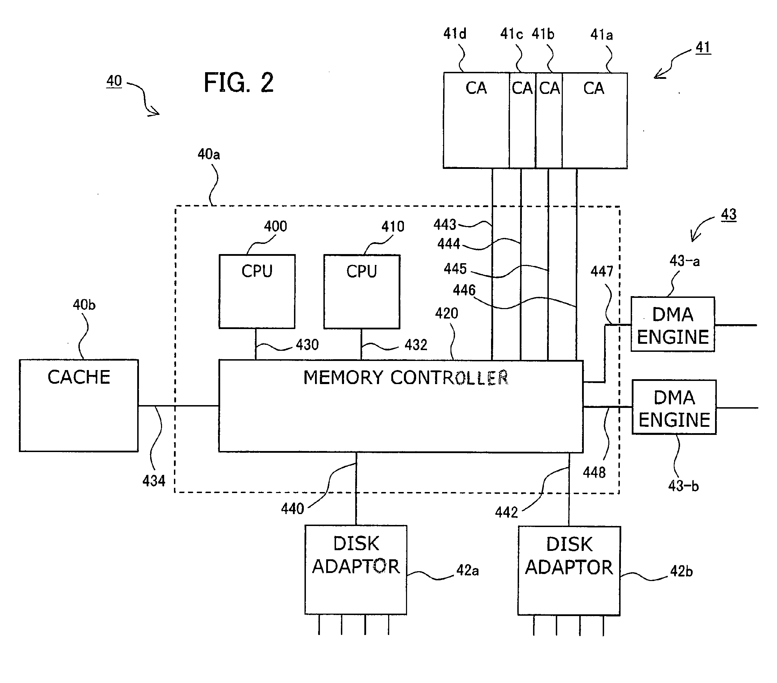

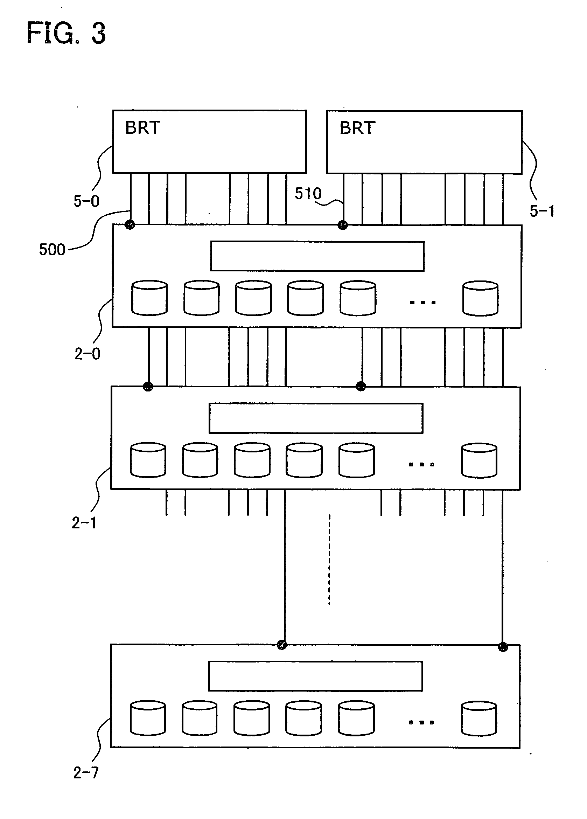

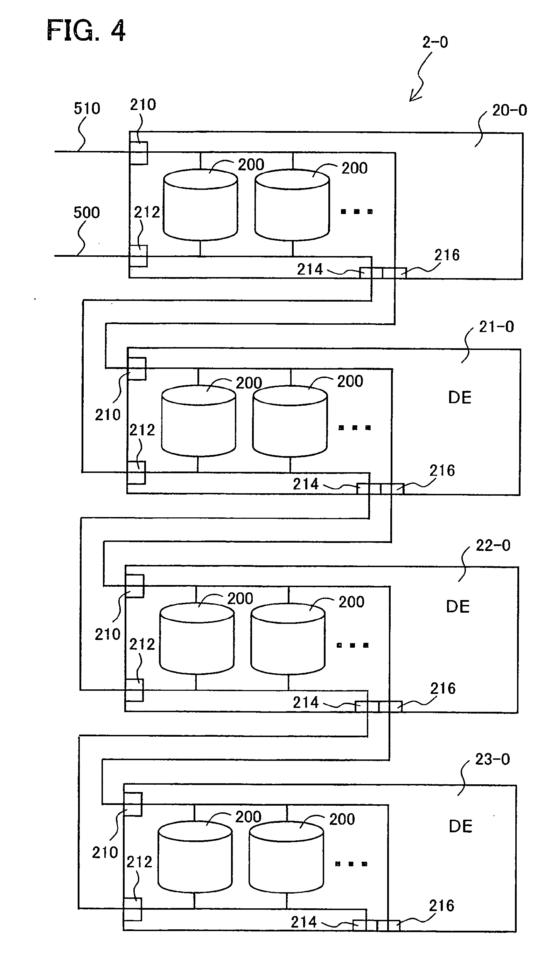

Fig. 1 is a block diagram depicting the data storage system according to an embodiment of the present invention, Fig. 2 is a block diagram depicting the control module in Fig. 1, Fig. 3 is a block diagram depicting the back end routers and disk enclosures in Fig. 1, and Fig. 4 is a block diagram depicting the disk enclosures in Fig. 1 and Fig. 3.

**Fig. 1** shows a large scale storage system having eight control modules as an example. As Fig. 1 shows, the storage system 1 has a plurality of disk enclosures 2-0 - 2-25 for holding data, a plurality of (eight in this case) of control modules 4-0 - 4-7 disposed between the host computers (data processing units), which are not illustrated, and a plurality of disk enclosures 2-0 - 2-25, a plurality (eight in this case) of back end routers (first switch unit: denoted as BRT in figures, hereafter called BRT) 5-0 - 5-7 disposed between the plurality of control modules 4-0 - 4-7 and the plurality of disk enclosures 2-0 - 2-25, and a plurality (two in this case) of front end routers (second switch unit: denoted as FRT in figures, hereafter called FRT) 6-0 - 6-1.

Each of the control modules 4-0 - 4-7 has cache managers 40, channel adapters (first interface unit: denoted as CA in figures) 41a ― 41d, disk adapters (second interface unit: denoted as DA in figures) 42a and 42b, and DMA (Direct Memory Access) engine (communication unit: denoted as DMA in figures) 43.

In Fig. 1, to simplify the drawing, reference symbols "40" of the cache managers, "41a", "41b", "41c" and "41d" of the channel adapters, "42a" and "42b" of the disk adapters, and "43" of the DMA are denoted only for the control module 4-0, and these reference symbols of the constituent elements of other control modules 4-1 - 4-7 are omitted.

The control modules 4-0 - 4-7 will be described with reference to **Fig. 2****.** The cache manager 40 performs read/write processing based on the processing request (read request or write request) from the host computer, and has a cache memory 40b and cache control unit 40a.

0051 The cache memory 40b holds a part of the data stored in a plurality of disks of the disk enclosures 2-0 - 2-25, that is, it plays a role of a cache for the plurality of disks.

The cache control unit 40a controls the cache memory 40b, channel adapter 41, device adapter 42 and DMA 43. For this, the cache control unit 40a has one or more (two in Fig. 2) CPUs 400 and 410 and memory controller 420. The memory controller 420 controls the read/write of each memory and switches paths.

The memory controller 420, connected with the cache memory 40b via the memory bus 434, is connected with the CPUs 400 and 410 via the CPU buses 430 and 432, and is also connected to the disk adapters 42a and 42b via the later mentioned four lanes of the high-speed serial buses (e.g. PCI-Express) 440 and 442. In the same way, the memory controller 420 is connected to the channel adapters 41a, 41b, 41c and 41d via the four lanes of high-speed serial buses (e.g. PCI-Express) 443, 444, 445 and 446, and is connected to the DMAs 43-a and 43-b via the four lanes of the high-speed serial buses (e.g. PCI-Express) 447 and 448.

As described later, this high-speed bus, such as PCI-Express, communicates in packets, and by disposing a plurality of lanes of serial buses, communication at fast response speeds with little delay, that is at low latency, becomes possible even if the number of signal lines is decreased.

The channel adapters 41a - 41d are the interfaces for the host computers, and the channel adapters 41a - 41d are connected with different host computers respectively. The channel adapters 41a - 41d are preferably connected to the interface unit of the corresponding host computer respectively by a bus, such as Fibre Channel and Ethernet, and in this case an optical fiber or coaxial cable is used for the bus.

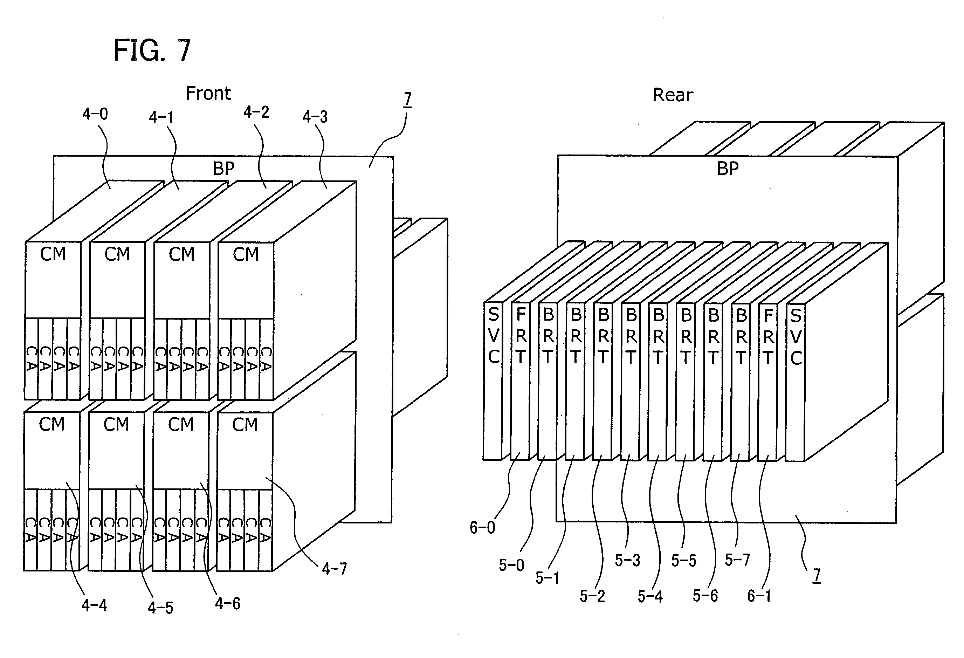

Each of these channel adapters 41a - 41d is constructed as a part of each control module 4-0 - 4-7, but must support a plurality of protocols as an interface unit between the corresponding host computer and control modules 4-0 - 4-7. Since the protocol to be supported will vary depending on the corresponding host computer, the cache manager 40, which is a major unit of the control modules 4-0 - 4-7, is mounted on a different printed circuit board, as described later in Fig. 7, so as to enable easy replacement of each channel adapter 41a ― 41d when necessary.

Examples of a protocol with the host computers which the channel adapters 41a - 41d should support is iSCSI (Internet Small Computer System Interface) corresponding to the Fibre Channel and Ethernet mentioned above. Each channel adapter 41a - 41d is directly connected with the cache manager 40 via a bus designed for connecting an LSI (Large Scale Integration) and printed circuit board, such as a PCI-Express bus, as mentioned above. By this, high throughput demanded between each channel adapter 41a - 41d and cache manager 40 can be implemented.

The disk adapters 42a and 42b are the interfaces of the disk enclosures 2-0 - 2-25 to the disk drives, and are connected to the BRTs 5-0 - 5-7 connected to the disk enclosures 2-0 - 2-25, for which four FC (Fibre Channel) ports are used. Each disk adapter 42a and 42b is directly connected with the cache manager 40 by a bus designed for connecting the LSI (Large Scale Integration) and printed circuit board, such as a PCI-Express bus, as mentioned above. By this, high throughout demanded between each disk adapter 42a and 42b and cache manager 40 can be implemented.

As Fig. 1 and Fig. 3 show, the BRTs 5-0 - 5-7 are multi-port switches which selectively switch and communicably connect the disk adapters 42a and 42b of each control module 4-0 - 4-7 and each disk enclosure 2-0 - 2-25.

As **Fig. 3** shows, a plurality (two in this case) of BRTs 5―0 ― 5―1 are connected to each disk enclosure 2-0 - 2-7. As **Fig. 4** shows, each disk enclosure 2-0 has a plurality of disk drives 200 having two ports respectively, and this disk enclosure 2-0 further has the unit disk enclosures 20-0 - 23-0 having four connection ports 210, 212, 214 and 216. These are connected in series so as to implement an increase of capacity.

In the disk enclosures 20-0 - 23-0, each port of each disk drive 200 is connected to the two ports 210 and 212 via a pair of FC cables from the two ports 210 and 212. These two ports 210 and 212 are connected to different BRTs 5-0 and 5-1, as described in Fig. 3.

As Fig. 1 shows, the disk adapters 42a and 42b of each control module 4-0 - 4-7 are connected to all the disk enclosures 2-0 - 2-25 respectively. In other words, the disk adapter 42a of each control module 4-0 - 4-7 is connected to the BRT 5―0 connected to the disk enclosure 2―0 ― 2-7 (see Fig. 3), the BRT 5-2 connected to the disk enclosures 2-8, 2-9, - -, the BRT 5-4 connected to the disk enclosures 2-16, 2―17, ― -, and the BRT 5-6 connected to the disk enclosures 2-24, 2-25, - -, respectively.

In the same way, the disk adapter 42b of each control module 4-0 - 4-7 is connected to the BRT 5-1 connected to the disk enclosures 2-0 - 2-7 (see Fig. 3), the BRT 5-3 connected to the disk enclosures 2―8, 2-9, - - , the BRT 5-5 connected to the disk enclosures 2-16, 2-17, - - , and the BRT 5-7 connected to the disk enclosures 2-24, 2―25, ― -, respectively.

In this way, a plurality (two in this case) of BRTs are connected to each disk enclosure 2-0 - 2-31, and different disk adapters 42a and 42b in a same control module 4-0 - 4-7 are connected to the two BRTs connected to the same disk enclosures 2-0 - 2-31 respectively.

By this configuration, each control module 4-0 - 4-7 can access all of the disk enclosures (disk drives) 2-0 - 2-31 via either disk adapter 42a or 42b.

Each of these disk adapters 42a and 42b, constructed as a part of the control modules 4-0 - 4-7, is mounted on the board of the cache manager 40, which is a major unit of the control modules 4-0 - 4-7, each disk adapter 42a and 42b is directly connected with the cache manager 40 by a PCI (Peripheral Component Inter-connect) - Express bus, for example, and by this, high throughput demanded between each disk adapter 42a and 42b and cache manager 40 can be implemented.

Also as Fig. 2 shows, each disk adapter 42a and 42b is connected to the corresponding BRTs 5-0 - 5-7 by a bus, such as Fibre Channel or Ethernet. In this case, the bus is installed on the printed circuit board of the back panel by electric wiring, as described later.

The disk adapters 42a and 42b of each control module 4-0 - 4-7 and BRTs 5-0 - 5-7 are in a one―to―one mesh connection, so as to be connected to all the disk enclosures, as described above, so as the number of control modules 4-0 - 4-7 (in other words, the number of disk adapters 42a and 42b) increases, the number of connections increases and the connection relationship becomes more complicated, which makes physical mounting difficult. But when Fibre Channel, which has a small number of signals constituting the interface is small, is used for the connection between the disk adapters 42a and 42b and BRTs 5-0 - 5-7, mounting on the printed circuit board becomes possible.

When each disk adapter 42a and 42b and corresponding BRTs 5-0 - 5-7 are connected by Fibre Channel, the BRTs 5-0 - 5-7 become the switches of the Fibre Channel. Each BRT 5-0 - 5-7 and the corresponding disk enclosures 2-0 - 2-31 are also connected by Fibre Channel, for example, and in this case the optical cables 500 and 510 are used for connection since the modules are different. As Fig. 1 shows, the DMA engines 43 mutually communicate with other control modules 4-0 - 4-7, and are in-charge of communication and data transfer processing with other control modules 4-0 - 4-7. Each of the DMA engines 43 of each control module 4-0 - 4-7 is constructed as a part of the control modules 4-0 - 4-7, and is mounted on the board of the cache manager 40, which is a major unit of the control modules 4-0 - 4-7. And the DMA engine 43 is directly connected with the cache manager 40 by the above mentioned high-speed serial bus, and mutually communicates with the DMA engine 43 of other control modules 4-0 - 4-7 via the FRTs 6-0 and 6-1.

The FRTs 6-0 and 6-1 are connected to the DMA engine 43 of a plurality (particularly three or more, eight in this case) of control modules 4-0 - 4-7, and selectively switch and communicably connect these control modules 4-0 - 4-7.

By this configuration, each DMA engine 43 of each control module 4-0 - 4-7 executes communication and data transfer processing (e.g. mirroring processing), which is generated according to the access request from the host computer between the cache manager 40 connected to this control module and the cache manager 40 of other control modules 4-0 - 4-7 via the FRTs 6-0 and 6-1.

As Fig. 2 shows, the DMA engine 43 of each control module 4-0 - 4-7 is comprised of a plurality (two in this case) of the DMA engines 43-a and 43-b, and each of these two DMA engines 43-a and 43-b uses the two FRTs 6-0 and 6-1.

The DMA engines 43-a and 43-b are connected to the cache manager 40 by a PCI-Express bus, for example, as mentioned above, so as to implement low latency.

In the case of communication and data transfer processing among each control module 4-0 - 4-7 (in other words among the cache managers 40 of each control module 4-0 - 4-7), data transfer volume is high and it is preferable to decrease the time required for communication, and high throughput and low latency (fast response speed) are demanded. Therefore as Fig. 1 and Fig. 2 show, the DMA engine 43 of each control module 4-0 - 4-7 and the FRTs 6-0 and 6-1 are connected by a bus using high-speed serial transmission (PCI-Express or Rapid-IO), which is designed to satisfy both demands of high throughput and low latency.

PCI-Express and Rapid-IO use 2.5 Gbps high-speed serial transmission, and for the bus interface thereof, a small amplitude differential interface called LVDS (Low Voltage Differential Signaling) is used.

### Read/write processing

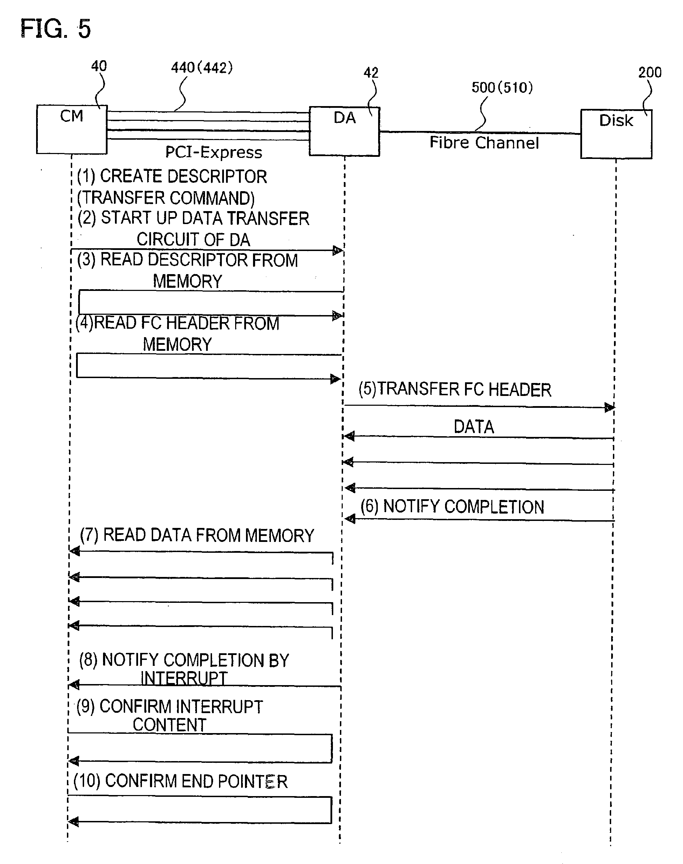

Now the read processing of the data storage system in Fig. 1 to Fig. 4 will be described. Fig. 5 is a diagram depicting the read operation of the configuration in Fig. 1 and Fig. 2.

When the cache manager 40 receives the read request from one host computer via a corresponding channel adapter 41a - 41d, and if the cache memory 40b holds the target data of this read request, the cache manager 40 sends this target data held in the cache memory 40b to the host computer via the channel adapters 41a - 41d.

If this data is not held in the cache memory 40b, the cache control unit 40a reads the target data from the disk drive 200 holding this data into the cache memory 40b, then sends the target data to the host computer which issued the read request.

This read processing with the disk drive will be described with reference to Fig. 5.
(1) The control unit 40a (CPU) of the cache manager 40 creates an FC header and descriptor in the descriptor area of the cache memory 40b. The descriptor is an instruction to request a data (DMA) transfer to the data transfer circuit (DMA circuit), and includes the address of the FC header on the cache memory, address of data to be transferred on the cache memory, number of data bytes thereof, and logical address of the disk of the data transfer.
(2) The data transfer circuit of the disk adapter 42 is started up.
(3) The started data transfer circuit of the disk adapter 42 reads the descriptor from the cache memory 40b.
(4) The start data transfer circuit of the disk adapter 42 reads the FC header from the cache memory 40b.
(5) The started data transfer circuit of the disk adapter 42 analyzes the descriptor and receives the data on the requested disk, first address and number of bytes, and transfers the FC header to the target disk drive 200 via the Fibre Channel 500 (510). The disk drive 200 reads the requested target data and sends it to the data transfer circuit of the disk adapter 42 via the Fibre Channel 500 (510).
(6) The disk drive 200 reads the requested target data and sends the completion notice to the data transfer circuit of the disk adapter 42 via the Fibre Channel 500 (510) when the transmission completes.
(7) When the completion notice is received, the started data transfer circuit of the disk adapter 42 reads the read data from the memory of the disk adapter 42 and stores it in the cache memory 40b.
(8) When the read transfer completes, the started data transfer circuit of the disk adapter 42 sends the completion notice to the cache manager 40 by an interrupt.
(9) When the interrupt factor from the disk adapter 42 is received, the control unit 42a of the cache manager 40 confirms the read transfer.
(10) The control unit 42a of the cache manager 40 checks the end pointer of the disk adapter 42, and confirms the read transfer completion.

All connections must have high throughput to achieve sufficient performance, and since in particular the signal exchange is frequent (seven times in Fig. 5) between the cache control unit 40a and the disk adapter 42, a bus with an especially low latency is required.

In this example, both PCI-Express (four lanes) and Fibre Channel (4G) are used as high throughput connections, but while the PCI-Express is a low latency connection, the Fibre Channel connection has a relatively high latency (data transfer takes time).

In the second prior proposal above, a Fibre Channel, whose latency is high, cannot be used for RT 14 between CM 10 and DA 13 or CA 11 (see Fig. 12), but in the present invention, which has the configuration in Fig. 1, Fibre Channel can be used for BRTs 5-0 - 5-7.

To implement low latency, the number of signals of the bus cannot be decreased to less than a certain number, but according to the present invention, Fibre Channel which uses small number of signal lines can be used for the connection between the disk adapter 42 and the BRT 5-0, so this decreases the number of signal lines on the back panel, which is effective for mounting.

Now the write operation will be described. When a write request is received from one of the host computers via a corresponding channel adapter 41a - 41d, the channel adapter 41a - 41d which received the write request command and write data inquires the cache manager 40 for the address of the cache memory 40b to which the write data is supposed to be written.

When the response is received from the cache manager 40, the channel adapter 41a - 41d writes the write data in the cache memory 40b of the cache manager 40, and also writes the write data to the cache memory 40b in at least one cache manager 40 which is different from this cache manager 40 (in other words, a cache manager 40 in a different control module 4-0 - 4-7). For this, the channel adapter 41a - 41d starts up the DMA engine 43, and writes the write data in the cache memory 40b in a cache manager 40 in another control module 4-0 - 4-7 via the FRTs 6-0 and 6-1.

Write data is written to the cache memories 40b of at least two different control modules 4-0 - 4-7 here because data is duplicated (mirrored) so as to prevent loss of data even if an unexpected hardware failure occurs in the control modules 4-0 - 4-7 or cache manager 40.

When the writing of write data to these plurality of cache memories 40b ends normally, the channel adapters 41a - 41d send the completion notice to the host computers 3-0 - 3-31, and processing ends.

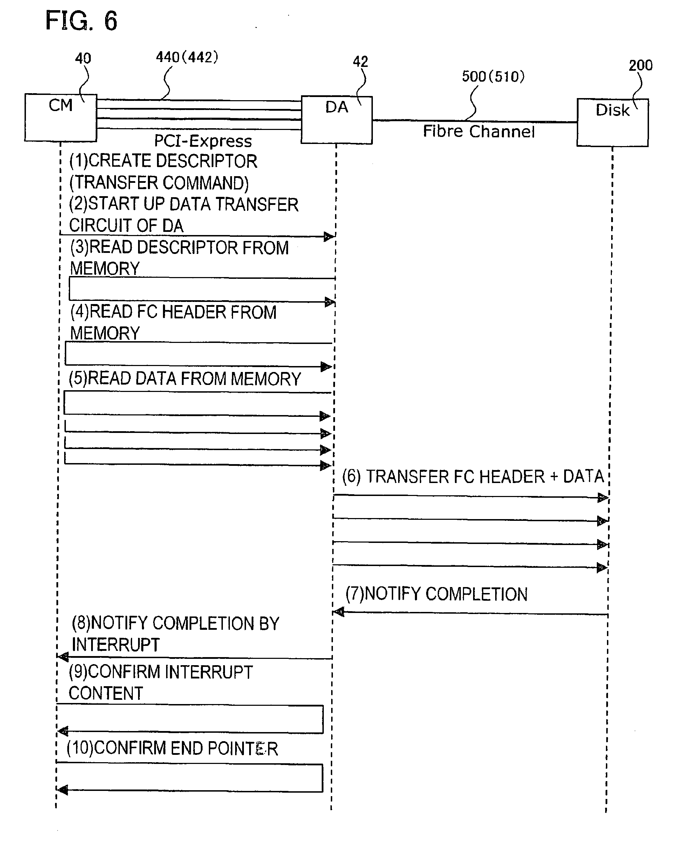

The write data must also be written back to the target disk drive (write back). The cache control unit 40a writes back the write data of the cache memory 40b to the disk drive 200 holding this target data according to the internal schedule. This write processing to the disk drive will be described with reference to **Fig. 6****.**
(1) The control unit 40a (CPU) of the cache manager 40 creates the FC header and descriptor in the descriptor area of the cache memory 40b. The descriptor is an instruction to request a data transfer (DMA) to the data transfer (DMA) circuit, and includes the address of the FC header on the cache memory, address of the data to be transferred on the cache memory and number of data bytes thereof, and logical address of the disk of the data transfer.
(2) The data transfer circuit of the disk adapter 42 is started up.
(3) The started data transfer circuit of the disk adapter 42 reads the descriptor from the cache memory 40b.
(4) The started data transfer circuit of the disk adapter 42 reads the FC header from the cache memory 40b.
(5) The started data transfer circuit of the disk adapter 42 analyzes the descriptor and receives the data of the requested disk, first address and number of bytes, and reads the data from the cache memory 40b.
(6) After the reading completes, the data transfer circuit of the disk adapter 42 transfers the FC header and data to the target disk drive 200 via the Fibre Channel 500 (510). The disk drive 200 writes the transferred data to the internal disk.
(7) When the writing of data completes, the disk drive 200 sends the completion notice to the data transfer circuit of the disk adapter 42 via the Fibre Channel 500 (510).
(8) When the completion notice is received, the started data transfer circuit of the disk adapter 42 sends the completion notice to the cache manager 40 by an interrupt.
(9) When the interrupt factor from the disk adapter 42 is received, the control unit 42a of the cache manager 40 confirms the write operation.
(10) The control unit 42a of the cache manager 40 checks the end pointer of the disk adapter 42 and confirms the write operation completion.

In both Fig. 6 and Fig. 5, an arrow mark indicates the transfer of a packet, such as data, and a U-turn arrow mark indicates the reading of data where data is sent back to the data request side. Since a confirmation of the start and end status of the control circuit in DA is requested, the data is exchanged seven times between the CM 40 and DA 42 to transfer data once. The data is exchanged twice between the DA 42 and disk 200.

By this, it is understood that low latency is required for the connection between the cache control unit 40 and disk adapter 42, and on the other hand, an interface which has a small number of signal lines can be used for the disk adapter 42 and disk device 200.

### Mounting structure

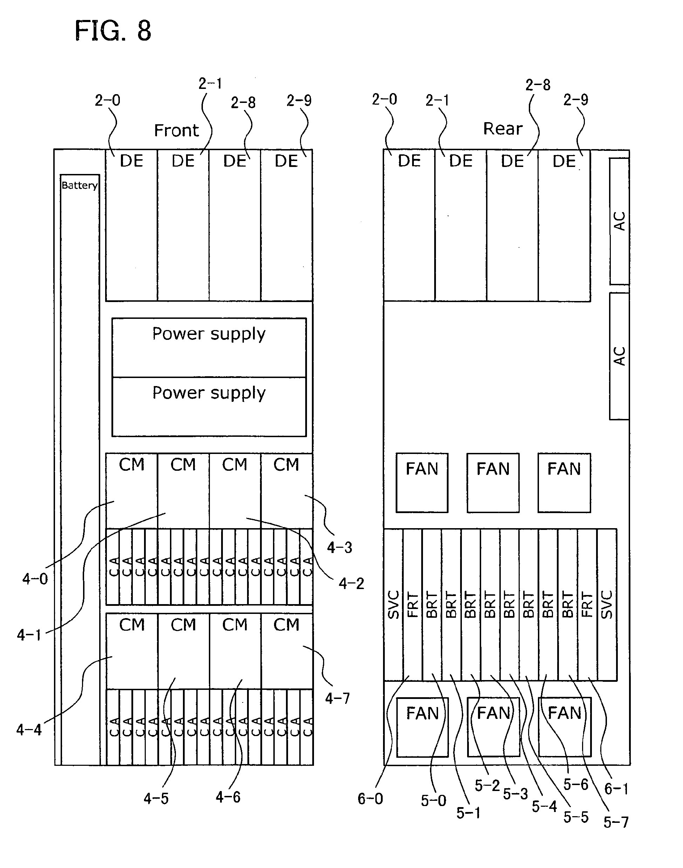

**Fig. 7** is a diagram depicting a mounting configuration example of the control module according to the present invention, Fig. 8 is a diagram depicting a mounting configuration example including the control module and disk enclosure in Fig. 7, and Fig. 9 and Fig. 10 are block diagrams depicting the data storage system having these mounting configurations.

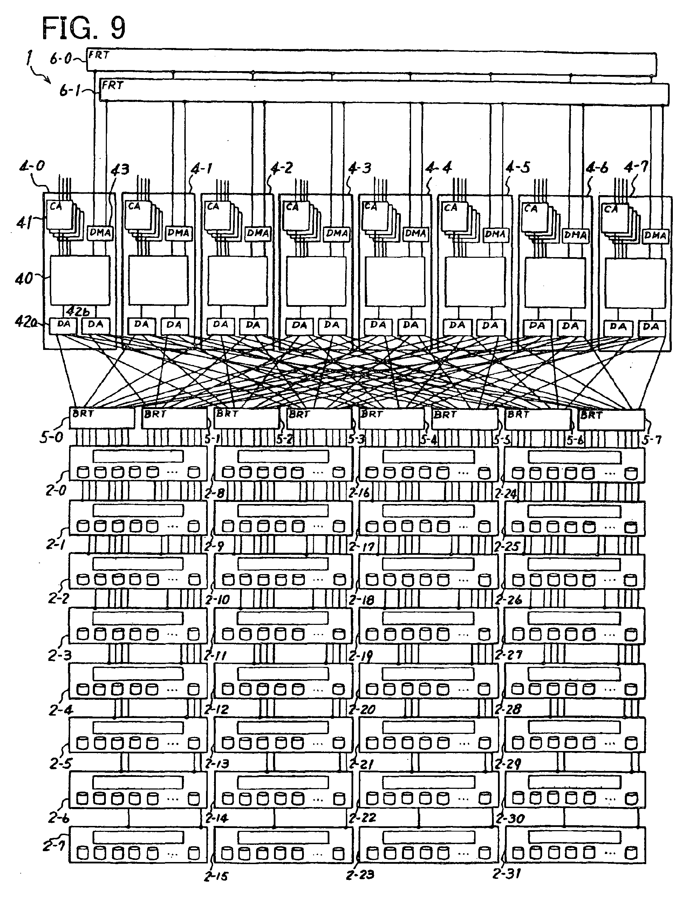

As **Fig. 8** shows, four disk enclosures 2-0, 2-1, 2-8 and 2-9 are installed in the upper side of the body of the storage device. The control circuit is installed in the bottom half of the storage device. This bottom half is divided into the front and back parts by the back panel 7, as shown in Fig. 7. Slots are created on the front and the back of the back panel 7 respectively. In the case of the storage system with the large scale configuration in **Fig. 9****,** eight (eight plates of) CMs 4-0 - 4-7 are disposed in the front side, and two (two plates of) FRTs 6-0 and 6-1, eight (eight plates of) BRTs 5-0 - 5-7, and the service processor SVC which is in-charge of power supply control (not illustrated in Fig. 1 and Fig. 9), are disposed in the back side.

In Fig. 7, the eight plates of CMs 4-0 - 4-7 and two plates of FRTs 6-0 and 6-1 are connected by four lanes of the PCI-Express via the back panel 7. The PCI-Express has four (differential and bi-directional) signal lines, so sixteen signal lines are used for four lanes, which means that the number of signal lines is 16×16=256. The eight plates of CMs 4-0 - 4-7 and eight plates of BRTs 5-0 - 5-7 are connected by Fibre Channel via the back panel 7. The Fibre Channel, which has differential and bi-directional signal lines, has 1×2×2=4 signal lines, so the number of signal lines used is 8×8×4=256.

By using the bus differently depending on the connection location, as described above, eight plates of CMs 4-0 - 4-7, two plates of FRTs 6-0 and 6-1, and eight plates of BRTs 5-0 - 5-7 can be implemented by 512 signal lines, even in the case of a storage system with large scale configuration as shown in Fig. 9. This number of signal lines is the number of signals that can sufficiently mounted on the back panel substrate 7, and the number of signal layers of the board is six, which is sufficient, and is in a range where implementation is practical in terms of cost.

In Fig. 8, four disk enclosures 2-0, 2-1, 2-8 and 2-9 (see Fig. 9) are installed, and the other disk enclosures 2-3 - 2-7 and 2-10 - 2-31 are installed in a different body.

The medium-scale storage system in **Fig. 10** can also be implemented by a similar configuration. In other words, the configuration of four units of CMs 4-0 - 4-3, four units of BRTs 5-0 - 5-3, two units of FRTs 6-0 - 6-1 and 16 modules of disk enclosures 2-0 - 2-15 can be implemented by the same architecture.

The disk adapters 42a and 42b of each control module 4-0 - 4-7 are connected to all the disk drives 200 by BRTs, so that each control module 4-0 - 4-7 can access all the disk drives via either disk adapter 42a or 42b.

These disk adapters 42a and 42b are mounted respectively on the board of the cache manager 40, which is a major unit of the control modules 4-0 - 4-7, and each disk adapter 42a and 42b can be directly connected with the cache manager 40 by such a low latency bus as PCI-Express, so high throughput can be implemented.

The disk adapters 42a and 42b of each control module 4-0 - 4-7 and BRTs 5-0 - 5-7 are in a one-to-one mesh connection, so even if the number of control modules 4-0 - 4-7 (in other words, the number of disk adapters 42a and 42b) of the system increases, Fibre Channel, which has a small number of signals constituting the interface, can be used for the connection between the disk adapters 42a and 42b and BRTs 5-0 - 5-7, which solves the mounting problem.

In the case of the communication and data transfer processing among each control module 4-0 - 4-7 (in other words, among the cache managers 40 of each control module 4-0 - 4-7), the data transfer volume is high and it is preferable to decrease the time required for connection, and both high throughput and low latency (fast response speed) are demanded, so as Fig. 2 shows, the DMA engine 43 of each control module 4-0 - 4-7 and FRTs 6-0 and 6-1 are connected by PCI-Express, which is a bus using high-speed serial transmission originally designed to satisfy both demands of high through and low latency.

### Other embodiments

In the above embodiments, the signal lines in the control module were stated to use PCI-Express, but other high-speed serial buses, such as Rapid-IO, can also be used. The numbers of channel adapters and disk adapters in the control module can be increased or decreased according to necessity.

For the disk drive, such a storage device as a hard disk drive, optical disk drive and magneto-optical disk drive can be used.

Since the second interface of each control module and the plurality of first switch units are connected, all the control modules can maintain redundancy to access all the storage devices, and even if the number of control modules increases, the control module and the first switch unit can be connected by a serial bus, which has a small number of signals constituting the interface, using the back panel, therefore mounting on the printed circuit board becomes possible while maintaining low latency communication within the control module. So the present invention is effective to unify the architecture from large scale to small scale, and can contribute to decreasing the cost of the device.

## Claims

1. A data storage system having:
a plurality of disk storage devices (200) which store data;
a plurality of control units (4-0∼4-7) each having a first interface unit (41) connected to an upper unit, a second interface unit (42a, 42b) connected to the plurality of disk storage devices (200), and a control module (40a) which executes an access to the plurality of disk storage devices (200) in response to an access instruction from the upper unit; and
a plurality of switches (5-0∼5-7) each of which is connected to the second interface unit (42a, 42b) of each control unit (4-0∼4-7) and selects a connection between the plurality of disk storage devices (200) and the second interface unit (42a, 42b),
**characterized by**:
a plurality of disk enclosures (2-0∼2-31) each having a plurality of unit disk enclosures (20-0∼23-0), the plurality of unit disk enclosures accommodating the said plurality of disk storage devices (200) and being connected in series, wherein each unit disk enclosure (20-0∼23-0) has a pair of first ports (210, 212), a pair of second ports (214, 216) and a pair of cables connecting one of the first ports (212) to one of the second ports (214) and another of the first ports (210) to another of the second ports (216), and the first ports (210, 212) of the first unit disk enclosure (20-0), at the top position of the said series connection, are connected to the said plurality of switches (5-0∼5-7), and the second ports (214, 216) of the first unit disk enclosure (20-0) are connected to the first ports (210, 212) of another unit disk enclosure (21-0).

2. A data storage system according to Claim 1, wherein, respectively of the plurality of disk storage devices (200) in the unit disk enclosure, each disk storage device has a pair of ports respectively connected to a corresponding cable, and one said switch (5-0) is connected to the said one first port (212) of the first unit disk enclosure (20-0) and another switch (5-1) is connected to said other first port (210) of the first unit disk enclosure (20-0).

3. A data storage system according to Claim 2, wherein, for each disk enclosure (2-0∼2-7), one of the first ports (212) of the first unit disk enclosure (20-0) is connected to one of said plurality of switches (5-0) and another of the first ports (210) is connected to another one of said plurality of switches (5-1).

4. A data storage system according to any preceding claim, further comprising:
a plurality of first circuit boards each of which mount said control unit (4-0∼4-7);
a plurality of second circuit boards each of which mount said switch (5-0∼5-7); and
a single back panel (7) to which is attached said plurality of first circuit boards and said plurality of second circuit boards and having a serial bus which electrically connects between said second interface unit (42a, 42b) of each attached first circuit board and said switch (5-0∼5-7) of each attached second circuit board.

5. A data storage system according to any preceding claim, wherein each of said control units has a pair of the said second interface units (42a, 42b), and for each control unit, each of the pair of second interface units is connected to a different one of the said plurality of switches (5-0∼5-7).

6. A capacity changing method of a data storage system having a plurality of disk storage devices (200) which store data, a plurality of control units (4-0∼4-7) having a first interface unit (41) connected to an upper unit, a second interface unit (42a, 42b) connected to said plurality of disk storage devices (200), and a control module (40a) which executes access to said plurality of disk storage devices (200) in response to an access instruction from an upper unit, and a plurality of switches (5-0∼5-7) each of which is connected to said second interface unit (42a, 42b) of each said control unit (4-0∼4-7) and selects a connection between said plurality of disk storage devices (200) and said second interface unit (42a, 42b),
**characterized by** comprising the step of:
connecting in series a second unit disk enclosure (21-0∼23-0) accommodating a plurality of said plurality of disk storage devices (200) to a first unit disk enclosure (20-0) , at the top position of the said series connection, accommodating another plurality of said plurality of disk storage devices (200);
connecting, for each unit disk enclosure (20-0∼23-0) having a pair of first ports (210, 212), a pair of second ports (214, 216) and a pair of cables, one of the first ports (212) to one of the second ports (214) by one of the pair of cables and another of the first ports (210) to another of the second ports (216) by another of the pair of cables,
wherein the first ports (210, 212) of the first unit disk enclosure (20-0) are connected to the said plurality of switches (5-0∼5-7), and the second ports (214, 216) of the first unit disk enclosure (20-0) are connected to the first ports (210, 212) of another unit disk enclosure (21-0).

7. The capacity changing method according to claim 6, wherein said connecting further comprises:
respectively of the plurality of disk storage devices (200) in each unit disk enclosure, each disk storage device (200) having a pair of ports, respectively connecting each of the pair of ports to a corresponding cable; and
connecting one of said second ports (214) of said first unit disk enclosure (20-0) to one of said first ports (212), and another of said second ports (216) to another of said first ports (210), of the second unit disk enclosure (21-0).

## Patentansprüche

1. Datenspeichersystem mit:
einer Mehrzahl von Plattenspeichervorrichtungen (200), die Daten speichern;
einer Mehrzahl von Steuereinheiten (4-0 ∼ 4-7), von denen jede eine erste Schnittstelleneinheit (41), die mit einer oberen Einheit verbunden ist, eine zweite Schnittstelleneinheit (42a, 42b), die mit der Mehrzahl von Plattenspeichervorrichtungen (200) verbunden ist, und ein Steuermodul (40a) hat, das einen Zugriff auf die Mehrzahl von Plattenspeichervorrichtungen (200) in Abhängigkeit von einem Zugriffsbefehl von der oberen Einheit ausführt; und
eine Mehrzahl von Schaltern (5-0 ∼ 5-7), von denen jeder mit der zweiten Schnittstelleneinheit (42a, 42b) jeder Steuereinheit (4-0 ∼ 4-7) verbunden ist und eine Verbindung zwischen der Mehrzahl von Plattenspeichervorrichtungen (200) und der zweiten Schnittstelleneinheit (42a, 42b) auswählt,
**gekennzeichnet durch**:
eine Mehrzahl von Plattengehäusen (2-0 ∼ 2-31), von denen jedes eine Mehrzahl von Einheitsplattengehäusen (20-0 ∼ 23-0) hat, wobei die Mehrzahl von Einheitsplattengehäusen die Mehrzahl von Plattenspeichervorrichtungen (200) aufnimmt und in Reihe verbunden ist, wobei jedes Einheitsplattengehäuse (20-0 ∼ 23-0) ein Paar von ersten Ports (210, 212), ein Paar von zweiten Ports (214, 216) und ein Paar von Kabeln hat, die einen der ersten Ports (212) mit einem der zweiten Ports (214) und einen anderen der ersten Ports (210) mit einem anderen der zweiten Ports (216) verbinden, und die ersten Ports (210, 212) der ersten Einheitsplattengehäuses (20-0) an der oberen Position der Reihenverbindung mit der Mehrzahl von Schaltern (5-0 - 5-7) verbunden sind und die zweiten Ports (214, 216) des ersten Einheitsplattengehäuses (20-0) mit den ersten Ports (210, 212) eines anderen Einheitsplattengehäuses (21-0) verbunden sind.

2. Datenspeichersystem nach Anspruch 1, wobei entsprechend der Mehrzahl von Plattenspeichervorrichtungen (200) in dem Einheitsplattengehäuse jede Plattenspeichervorrichtung ein Paar von Ports hat, die jeweils mit einem entsprechenden Kabel verbunden sind, und einer der Schalter (5-0) mit dem einen ersten Port (212) des ersten Einheitsplattengehäuses (20-0) verbunden ist und ein anderer Schalter (5-1) mit dem anderen ersten Port (210) des ersten Einheitsplattengehäuses (20-0) verbunden ist.

3. Datenspeichersystem nach Anspruch 2, wobei für jedes Plattengehäuse (2-0 - 2-7) einer der ersten Ports (212) des ersten Einheitsplattengehäuses (20-0) mit einem der Mehrzahl von Schaltern (5-0) verbunden ist und ein anderer der ersten Ports (210) mit einem anderen der Mehrzahl von Schaltern (5-1) verbunden ist.

4. Datenspeichersystem nach einem der vorhergehenden Ansprüche, ferner enthaltend:
eine Mehrzahl von ersten Schaltungsplatten, von denen jede an der Steuereinheit (4-0 - 4-7) angebracht ist,
eine Mehrzahl von zweiten Schaltungsplatten, von denen jede den Schalter (5-0 - 5-7) anbringt; und
eine einzelne Rückplatte (7), an der die Mehrzahl von ersten Schaltungsplatten und die Mehrzahl von zweiten Schaltungsplatten befestigt ist und die einen seriellen Bus hat, der eine elektrische Verbindung zwischen der zweiten Schnittstelleneinheit (42a, 42b) jeder befestigten ersten Schaltungsplatte und dem Schalter (5-0 ∼ 5-7) jeder befestigten zweiten Schaltungsplatte herstellt.

5. Datenspeichersystem nach einem der vorhergehenden Ansprüche, wobei jede der Steuereinheiten ein Paar von den zweiten Schnittstelleneinheiten (42a, 42b) hat und für jede Steuereinheit jedes von den Paaren von zweiten Schnittstelleneinheiten mit einem verschiedenen der Mehrzahl von Schaltern (5-0 ∼ 5-7) verbunden ist.

6. Kapazitätsänderungsverfahren eines Datenspeichersystems, das eine Mehrzahl von Plattenspeichervorrichtungen (200), die Daten speichern, eine Mehrzahl von Steuereinheiten (4-0 ∼ 4-7), die eine erste Schnittstelleneinheit (41), die mit einer oberen Einheit verbunden ist, eine zweite Schnittstelleneinheit (42a, 42b), die mit der Mehrzahl von Plattenspeichervorrichtungen (200) verbunden ist, und ein Steuermodul (40a) hat, das einen Zugriff auf die Mehrzahl von Plattenspeichervorrichtungen (200) in Abhängigkeit von einem Zugriffsbefehl von der oberen Einheit ausführt, und eine Mehrzahl von Schaltern (5-0 ∼ 5-7) hat, von denen jeder mit der zweiten Schnittstelleneinheit (42a, 42b) jeder Steuereinheit (4-0 ∼ 4-7) verbunden ist und eine Verbindung zwischen der Mehrzahl von Plattenspeichervorrichtungen (200) und der zweiten Schnittstelleneinheit (42a, 42b) auswählt,
**gekennzeichnet durch** das Enthalten der Schritte:
Verbinden eines zweiten Einheitsplattengehäuses (21-0 ∼ 23-0), das eine Mehrzahl der Mehrzahl von Plattenspeichervorrichtungen (200) aufnimmt, in Reihe mit einem ersten Einheitsplattengehäuse (20-0), die eine andere Mehrzahl von Plattenspeichervorrichtungen (200) aufnimmt, an der oberen Position der Reihenverbindung;
Verbinden, für jedes Einheitsplattengehäuse (20-0 - 23-0), das ein Paar von ersten Ports (210, 212), ein Paar von zweiten Ports (214, 216) und ein Paar von Kabeln hat, einen der ersten Ports (212) mit einem der zweiten Ports (214) **durch** eines des Paars von Kabeln und einen der anderen der ersten Ports (210) mit einem anderen der zweiten Ports (216) **durch** ein anderes des Paars von Kabeln,
wobei die ersten Ports (210, 212) des ersten Einheitsplattengehäuses (20-0) mit der Mehrzahl von Schaltern (5-0 - 5-7) verbunden sind und die zweiten Ports (214, 216) des ersten Einheitsplattengehäuses (20-0) mit den ersten Ports (210, 212) eines anderen Einheitsplattengehäuses (21-0) verbunden sind.

7. Kapazitätsänderungsverfahren nach Anspruch 6, wobei das Verbinden ferner enthält:
Verbinden, wobei entsprechend der Mehrzahl von Plattenspeichervorrichtungen (200) in dem Einheitsplattengehäuse jede Plattenspeichervorrichtung ein Paar von Ports hat, jeweils jedes des Paars von Ports mit einem entsprechenden Kabel; und
Verbinden eines der zweiten Ports (214) des ersten Einheitsplattengehäuses (20-0) mit einem der ersten Ports (212) und einen anderen der zweiten Ports (216) mit einem anderen der ersten Ports (210) des zweiten Einheitsplattengehäuses (21-0).

## Revendications

1. Système de stockage de données comprenant :
une pluralité de dispositifs de stockage sur disque (200) qui stockent des données ;
une pluralité d'unités de commande (4-0∼4-7) ayant chacune une première unité d'interface (41) connectée à une unité supérieure, une seconde unité d'interface (42a, 42b) connectée à la pluralité de dispositifs de stockage sur disque (200) et un module de commande (40a) qui exécute un accès à la pluralité de dispositifs de stockage sur disque (200) en réponse à une instruction d'accès provenant de l'unité supérieure ; et
une pluralité de commutateurs (5-0∼5-7) étant chacun connecté à la seconde unité d'interface (42a, 42b) de chaque unité de commande (4-0∼4-7) et sélectionnant une connexion entre la pluralité de dispositifs de stockage sur disque (200) et la seconde unité d'interface (42a, 42b),
**caractérisé par** :
une pluralité de boîtiers de disque (2-0∼2-31) ayant chacun une pluralité de boîtiers de disque unitaires (20- 0∼23-0), la pluralité de boîtiers de disque unitaires logeant ladite pluralité de dispositifs de stockage sur disque (200) et étant connectés en série, chaque boîtier de disque unitaire (20-0∼23-0) comprenant une paire de premiers ports (210, 212), une paire de seconds ports (214, 216) et une paire de câbles connectant l'un des premiers ports (212) à l'un des seconds ports (214) et un autre des premiers ports (210) à un autre des seconds ports (216), et les premiers ports (210, 212) du premier boîtier de disque unitaire (20-0), à la position supérieure de ladite connexion en série, étant connectés à ladite pluralité de commutateurs (5-0∼5-7) et les seconds ports (214, 216) du premier boîtier de disque unitaire (20-0) étant connectés aux premiers ports (210, 212) d'un autre boîtier de disque unitaire (21-0).

2. Système de stockage de données selon la revendication 1, dans lequel parmi la pluralité de dispositifs de stockage sur disque (200) respectifs dans le boîtier de disque unitaire, chaque dispositif de stockage sur disque comprend une paire de ports connectés respectivement à un câble correspondant et l'un desdits commutateurs (5-0) est connecté audit un premier port (212) du premier boîtier de disque unitaire (20-0) et un autre commutateur (5-1) est connecté audit autre premier port (210) du premier boîtier de disque unitaire (20-0).

3. Système de stockage de données selon la revendication 2, dans lequel, pour chaque boîtier de disque (2-0∼2-7), l'un des premiers ports (212) du premier boîtier de disque unitaire (20-0) est connecté à l'un de ladite pluralité de commutateurs (5-0) et un autre des premiers ports (210) est connecté à un autre de ladite pluralité de commutateurs (5-1).

4. Système de stockage de données selon l'une quelconque des revendications précédentes, comprenant en outre :
une pluralité de premières cartes de circuits imprimés, chacune étant montée sur ladite unité de commande (4-0∼4-7) ;
une pluralité de secondes cartes de circuits imprimés, chacune étant montée sur ledit commutateur (5-0∼5-7) ; et
un panneau arrière simple (7) auquel est attachée ladite pluralité de premières cartes de circuits imprimés et ladite pluralité de secondes cartes de circuits imprimés et ayant un bus série qui se connecte électriquement entre ladite seconde unité d'interface (42a, 42b) de chaque première carte de circuits imprimés attachée et ledit commutateur (5-0∼5-7) de chaque seconde carte de circuits imprimés attachée.

5. Système de stockage de données selon l'une quelconque des revendications précédentes, dans lequel chacune desdites unités de commande comprend une paire desdites secondes unités d'interface (42a, 42b) et, pour chaque unité de commande, chacune de la paire des secondes unités d'interface est connectée à un commutateur différent de ladite pluralité de commutateurs (5-0∼5-7).

6. Procédé de changement de capacité d'un système de stockage de données ayant une pluralité de dispositifs de stockage sur disque (200) qui stockent des données, une pluralité d'unités de commande (4-0∼4-7) ayant une première unité d'interface (41) connectée à une unité supérieure, une seconde unité d'interface (42a, 42b) connectée à ladite pluralité de dispositifs de stockage sur disque (200), et un module de commande (40a) qui exécute l'accès à ladite pluralité de dispositifs de stockage sur disque (200) en réponse à une instruction d'accès provenant d'une unité supérieure, et une pluralité de commutateurs (5-0∼5-7) étant chacun connecté à ladite seconde unité d'interface (42a, 42b) de chaque dite unité de commande (4-0∼4-7) et sélectionnant une connexion entre ladite pluralité de dispositifs de stockage sur disque (200) et ladite seconde unité d'interface (42a, 42b),
**caractérisé en ce qu'**il comprend l'étape consistant à :
connecter en série un second boîtier de disque unitaire (21-0∼23-0) contenant une pluralité de ladite pluralité de dispositifs de stockage sur disque (200) à un premier boîtier de disque unitaire (20-0), à la position supérieure de ladite connexion en série, contenant une autre pluralité de ladite pluralité de dispositifs de stockage sur disque (200) ;
connecter, pour chaque boîtier de disque unitaire (20-0∼23-0) ayant une paire de premiers ports (210, 212), une paire de seconds ports (214, 216) et une paire de câbles, de l'un des premiers ports (212) à l'un des seconds ports (214) au moyen de l'un de la paire de câbles et d'un autre des premiers ports (210) à un autre des seconds ports (216) au moyen d'un autre de la paire de câbles,
dans lequel les premiers ports (210, 212) du premier boîtier de disque unitaire (20-0) sont connectés à ladite pluralité de commutateurs (5 - 0 ∼ 5 - 7) et les seconds ports (214, 216) du premier boîtier de disque unitaire (20-0) sont connectés aux premiers ports (210, 212) d'un autre boîtier de disque unitaire (210).

7. Procédé de changement de capacité selon la revendication 6, dans lequel ladite connexion comprend en outre :
parmi la pluralité des dispositifs de stockage sur disque (200) respectifs dans chaque boîtier de disque unitaire, chaque dispositif de stockage sur disque (200) comprenant une paire de ports, la connexion respective de chacun de la paire de ports à un câble correspondant ; et
la connexion de l'un desdits seconds ports (214) dudit premier boîtier de disque unitaire (20-0) à l'un desdits premiers ports (212) et d'un autre desdits seconds ports (216) à un autre desdits premiers ports (210), du second boîtier de disque unitaire (21-0).
